# EUROPÄISCHE PATENTSCHRIFT

(11) **EP 1 777 131 B1**
(45) Veröffentlichungstag und Bekanntmachung des Hinweises auf die Patenterteilung: **20.01.2010**
(21) Anmeldenummer: 06020717.2
(22) Anmeldetag: 02.10.2006
(51) Int. Cl.: B60T 7/08

(54) **Bremshebelanordnung für Feststellbremse**
Lever assembly for a parking brake
Assemblage de levier pour un frein de stationnement

(30) Priorität: 19.10.2005 DE 102005049946
(43) Veröffentlichungstag der Anmeldung: 25.04.2007
(73) Patentinhaber: GM Global Technology Operations, Inc., Detroit, MI 48265-3000 (US)
(72) Erfinder: Müller, Uwe, 60489 Frankfurt (DE)
(74) Vertreter: Daniel, Ulrich W.P.

(56) Entgegenhaltungen:
- WO-A-95/01886
- DE-A1- 4 315 237

## Beschreibung

Die vorliegende Erfindung liegt auf dem technischen Gebiet der Feststellbremsen für Kraftfahrzeuge und betrifft eine Bremshebelanordnung für eine Feststellbremse in einem Kraftfahrzeug nach dem Oberbegriff von Anspruch 1.

In manchen Kraftfahrzeugen ist es praktisch den Handbremshebel in einer außermittigen Position anzuordnen und den Bremszugabgang in der Fahrzeugmitte vorzusehen. Zu diesem Zweck ist im Bereich der Schwenkachse des Handbremshebels eine vom Handbremshebel seitlich abragende Mitnehmerachse für den Bremszug vorgesehen, die an ihren beiden Enden in jeweiligen Drehlagern drehbar gelagert und mit dem Handbremshebel starr verbunden ist.

WO 95/011886 offenbart als nächstliegender Stand der Technik eine Bremshebelanordnung mit den Merkmalen des Oberbegriffs des Anspruchs 1.

Nun hat sich in der Praxis gezeigt, dass die Mitnehmerachse und deren Drehlagerungen durch senkrecht zur Schwenkebene des Bremshebels gerichtete, seitlich auf den Bremshebel einwirkende Kräfte stark belastet und dementsprechend stabil auszulegen sind, um eine Beschädigung zu vermeiden. Solche seitlichen Kräfte können beispielsweise durch eine fehlerhafte Bedienung des Bremshebels auftreten, etwa wenn der Bremshebel nicht genau in Schwenkrichtung gezogen oder gelöst wird, sondern wenn der Bediener schräg am Bremshebel zieht oder drückt. Häufig tritt auch ein ungewolltes seitliches Drücken am Bremshebel auf, wenn sich Fahrer oder Beifahrer zum gegenüberliegenden Sitz neigen und versehentlich den Bremshebel berühren.

Nachteilig bei einer solchen erforderlichen stabilen Auslegung der Mitnehmerachse und deren Drehlagerungen sind vor allem die damit einher gehenden hohen Materialkosten. Zudem müssen die Drehlager mit einer relativ hohen Genauigkeit gepasst werden, um durch die gegengleiche Belastung der Drehlager Kippspiel und damit einher gehende Geräusche zu vermeiden, was zu vergleichsweise hohen Fertigungskosten führt.

Demgegenüber besteht die Aufgabe der vorliegenden Erfindung darin, eine Bremshebelanordnung für eine Feststellbremse eines Kraftfahrzeugs zur Verfügung zu stellen, mit welcher der vorgenannte Nachteil hoher Material- und Fertigungkosten vermieden werden kann.

Diese Aufgabe wird nach dem Vorschlag der Erfindung durch eine Bremshebelanordnung für eine Feststellbremse eines Kraftfahrzeugs mit den Merkmalen des unabhängigen Anspruchs gelöst. Vorteilhafte Ausgestaltungen der Erfindung sind durch die Merkmale der Unteransprüche angegeben.

Erfindungsgemäß ist eine Bremshebelanordnung für eine Feststellbremse eines Kraftfahrzeugs gezeigt, welche einen Bremshebel zur manuellen Betätigung wenigstens einer Radbremse und eine drehbar gelagerte Mitnehmerachse für einen Bremszug, durch welchen Zugkräfte auf die Radbremse übertragen werden können, umfasst. Der Bremshebel ist hierbei mit der Mitnehmerachse in Drehrichtung der Mitnehmerachse drehfest gekoppelt.

Die erfindungsgemäße Bremshebelanordnung zeichnet sich in wesentlicher Weise dadurch aus, dass der Bremshebel mittels einer in Richtung der Mitnehmerachse verschiebbaren, formschlüssigen Verbindung mit der Mitnehmerachse gekoppelt ist.

Erfindungsgemäß kann durch die Entkopplung von Bremshebel und Mitnehmerachse in Richtung der Mitnehmerachse eine Übertragung von senkrecht zur Schwenkebene des Bremshebels gerichteten, auf den Bremshebel einwirkenden Kräften auf die Mitnehmerachse vermieden werden. Die Mitnehmerachse und deren Drehlagerungen, die demzufolge wesentlich geringeren Belastungen ausgesetzt sind und lediglich das zum Aufwickeln des Bremszugs notwendige Kraftmoment übertragen, sowie die aus der Bremszugkraft resultierenden Kräfte in den Drehlagerungen aufnehmen müssen, können somit weniger stabil ausgeführt werden, wodurch Materialkosten eingespart werden können. Zudem treten ein Kippspiel und damit einhergehend Geräusche nicht auf, so dass die Passgenauigkeit entsprechend reduziert werden kann, was die Fertigungskosten vermindert.

Bei einer vorteilhaften Ausgestaltung der Erfindung ist die formschlüssige Verbindung zwischen dem Bremshebel und der Mitnehmerachse in Drehrichtung der Mitnehmerachse drehfest ausgeführt. Eine solche drehfeste Ausführung der formschlüssigen Verbindung kann, im Querschnitt in der Schwenkebene des Bremshebels betrachtet, durch eine nicht-runde Form, beispielsweise eine viereckige, dreieckige oder sternförmige Form, mit passender Gegenform der formschlüssigen Verbindung zwischen Bremshebel und Mitnehmerachse erreicht werden.

Bei einer alternativen vorteilhaften Ausgestaltung der Erfindung ist die formschlüssige Verbindung zwischen dem Bremshebel und der Mitnehmerachse in Drehrichtung der Mitnehmerachse drehbeweglich, was, im Querschnitt in der Schwenkebene des Bremshebels betrachtet, durch eine runde Form mit passender Gegenform der formschlüssigen Verbindung zwischen Bremshebel und Mitnehmerachse erreicht wird. In diesem Fall ist zusätzlich ein Kopplungsmechanismus zur drehfesten Kopplung von Bremshebel und Mitnehmerachse ausgebildet.

Moderne Kraftfahrzeuge sind üblicherweise mit einer Nachstellvorrichtung für die Feststellbremse ausgestattet, durch welche der Abstand ("Luftspiel") zwischen Bremsbelag und Bremstrommel bzw. Bremsscheibe nachgestellt (verringert) werden kann, da das Luftspiel während des Gebrauchs eines Kraftfahrzeugs aufgrund von Verschleiß von der Bremsreibung ausgesetzten Bauteilen sowie einer Längung des Bremszugs allmählich zunimmt. Zur Nachstellung des Lüftspiels von Feststellbremsen werden in Kraftfahrzeugen beispielsweise manuelle Nachstellvorrichtungen eingebaut, bei denen der Bremszug mit einer Gewindestange verbunden ist, welche in eine mit dem Bremshebel verbundene Schraubenmutter greift, so dass durch ein Eindrehen der Gewindestange in die Schraubenmutter die für die Kraftübertragung wirksame, effektive Länge des Bremszugs verkürzt werden kann.

Nachteilig bei solchen Nachstellvorrichtungen für das Luftspiel in gattungsgemäßen Bremshebelanordnungen ist insbesondere die Tatsache, dass zur Bedienung der Nachstellvorrichtung ein Loch in der Mittelkonsole oder im Fahrzeugunterboden vorgesehen werden muss.

Zur Vermeidung dieses Nachteils ist gemäß einer besonders vorteilhaften Ausgestaltung der Erfindung der Kopplungsmechanismus zur drehfesten Kopplung von Bremshebel und Mitnehmerachse mit einem Lüftspiel-Nachstellmechanismus zum Verdrehen der Mitnehmerachse relativ zum Bremshebel versehen, so dass auf das Anbringen eines Lochs in der Mittelkonsole oder im Fahrzeugunterboden verzichtet werden kann.

Weiterhin ist die erfindungsgemäße Bremshebelanordnung vorteilhaft mit einem in der Schwenkebene des Bremshebels angeordneten und in eine Ausnehmung des Bremshebels eingetauchten Stützelement zum Abstützen des Bremshebels in Richtung der Mitnehmerachse versehen, durch welches senkrecht zur Schwenkebene des Bremshebels gerichtete, auf den Bremshebel einwirkende Kräfte aufgenommen werden können.

Die Erfindung erstreckt sich ferner auf eine Feststellbremse eines Kraftfahrzeugs, welche eine wie oben beschriebene Bremshebelanordnung umfasst. Weiterhin erstreckt sich die Erfindung auf ein Kraftfahrzeug, das mit einer solchen Feststellbremse ausgerüstet ist.

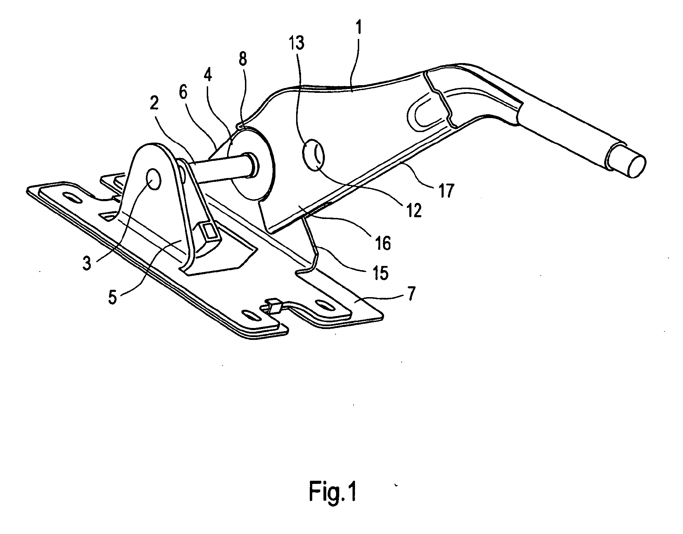

Die Erfindung wird nun anhand eines Ausführungsbeispiels näher erläutert, wobei Bezug auf die beigefügten Zeichnungen genommen wird. Es zeigen
- Fig. 1: eine schematische perspektivische Ansicht einer Ausführungsform einer erfindungsgemäßen Bremshebelanordnung für eine Feststellbremse;
- Fig. 2: eine weitere schematische perspektivische Ansicht der Ausführungsform einer erfindungsgemäßen Nachstellvorrichtung für eine Feststellbremse von Fig. 1.

In den beigefügten Figuren ist eine Ausführungsform einer erfindungsgemäßen Bremshebelanordnung für eine Feststellbremse dargestellt. Demnach umfasst eine erfindungsgemäße Bremshebelanordnung einen Bremshebel 1 und eine Mitnehmerachse 2, die an den Drehlagern 3, 4 drehbar gelagert ist. Die Drehlager 3, 4 sind hierbei an jeweiligen Lagerböcken 5, 6 geformt, welche ihrerseits an einer mit dem Fahrzeugboden verbundenen Sockelplatte 7 angebracht sind.

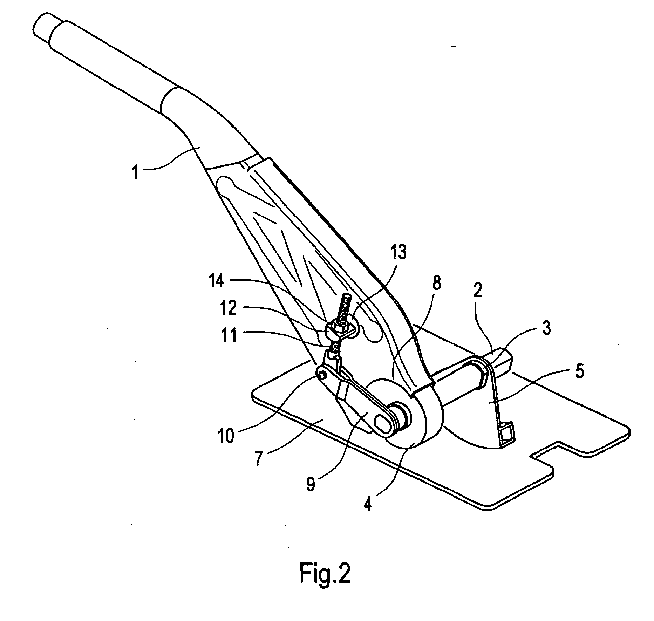

Der Handbremshebel 1 ist mit der Mitnehmerachse 2 mittels einer formschlüssigen Verbindung 8 verbunden, welche im Schnitt in der Schwenkebene des Bremshebels 1 eine runde Form hat und somit drehbeweglich ist. Zur drehfesten Kopplung zwischen Bremshebel 1 und Mitnehmerachse 2 ist ein in Fig. 2 dargestellter Kopplungsmechanismus vorgesehen. Der Kopplungsmechanismus umfasst eine mit der Mitnehmerachse 1 drehfest verbundene Kopplungsstange 9, die mit einer Gewindestange 11 mittels eines Schwenkgelenks 10 gelenkig verbunden ist. Die Gewindestange 11 ist ihrerseits durch das Loch eines Lochbolzens 12 geführt, welcher in eine entsprechende Bohrung 13 im Bremshebel 1 bezüglich einer zur Mitnehmerachse parallelen Drehachse drehbeweglich eingesetzt ist. Die Gewindestange ist auf der anderen Seite des Lochbolzens 12 durch eine Schraubenmutter 14 gesichert. Durch den dargestellten Kopplungsmechanismus kann somit eine drehfeste Kopplung zwischen Bremshebel 1 und Mitnehmerachse 2 erreicht werden, wodurch ein in den Figuren nicht dargestellter Bremszug durch Verschwenken des Bremshebels 1 angezogen oder gelockert werden kann.

Weiterhin stellt der Kopplungsmechanismus eine Luftspiel-Nachstellvorrichtung für die Feststellbremse dar, da, bezüglich der Drehrichtung der Mitnehmerachse 2, die relative Position des Bremshebels zur Mitnehmerachse 2 durch Anziehen oder Lockern der Schraubenmutter 14 geändert werden kann. Mit anderen Worten kann durch Anziehen oder Lockern der Schraubenmutter 14 der Bremshebel 1 relativ zur Mitmehmerachse 2 verdreht werden. Durch die gelenkige Verbindung von Koppelstange 4 und Gewindestange 11, sowie durch die drehbewegliche Lagerung des Lochbolzens 12 in der Bohrung 13 des Bremshebels 1, ist eine solche Verdrehung des Bremshebels 1 relativ zur Mitnehmerachse 2 problemlos möglich. Auf das Vorsehen eines Lochs in der Mittelkonsole oder dem Fahrzeugunterboden zur Bedienung einer Lüftspiel-Nachstellvorrichtung kann somit vorteilhaft verzichet werden.

Weiterhin ist eine von der Sockelplatte 7 in der Schwenkebene des Bremshebels 1 abragende Stützplatte 15 vorgesehen, welche in eine durch die beiden Seitenplatten 15, 16 geformte Ausnehmung des Bremshebels taucht. Die Stützplatte 15 ist somit in der Lage seitlich auf den Bremshebel einwirkende Kräfte aufzunehmen und den Bremshebel gegen ein seitliches Verschieben zu sichern.

### Bezugszeichenliste

- 1: Bremshebel
- 2: Mitnehmerachse
- 3: Drehlager
- 4: Drehlager
- 5: Lagerbock
- 6: Lagerbock
- 7: Sockelplatte
- 8: formschlüssige Verbindung
- 9: Koppelstange
- 10: Schwenkgelenk
- 11: Gewindestange
- 12: Lochbolzen
- 13: Bohrung
- 14: Schraubenmutter
- 15: Stützplatte
- 16: Seitenplatte
- 17: Seitenplatte

## Patentansprüche

1. Bremshebelanordnung für eine Feststellbremse eines Kraftfahrzeugs, welche einen Bremshebel (1) zur manuellen Betätigung wenigstens einer Radbremse und eine drehbar gelagerte Mitnehmerachse (2) für einen Bremszug, durch welchen Zugkräfte auf die Radbremse übertragen werden können, umfasst, wobei der Bremshebel mit der Mitnehmerachse in Drehrichtung der Mitnehmerachse drehfest gekoppelt ist,
**dadurch gekennzeichnet, dass** der Bremshebel (1) mittels einer in Richtung der Mitnehmerachse verschiebbaren, formschlüssigen Verbindung (8) mit der Mitnehmerachse (2) gekoppelt ist.

2. Bremshebelanordnung nach Anspruch 1,
**dadurch gekennzeichnet, dass** die formschlüssige Verbindung zwischen dem Bremshebel und der Mitnehmerachse in Drehrichtung der Mitnehmerachse drehfest ist.

3. Bremshebelanordnung nach Anspruch 1,
**dadurch gekennzeichnet, dass** die formschlüssige Verbindung zwischen dem Bremshebel und der Mitnehmerachse in Drehrichtung der Mitnehmerachse drehbeweglich ist, und weiterhin ein Kopplungsmechanismus zur drehfesten Kopplung von Bremshebel und Mitnehmerachse ausgebildet ist.

4. Bremshebelanordnung nach Anspruch 3,
**dadurch gekennzeichnet, dass** der Kopplungsmechanismus zur drehfesten Kopplung von Bremshebel und Mitnehmerachse ein Drehung der Mitnehmerachse relativ zum Bremshebel ermöglicht.

5. Bremshebelanordnung nach einem der Ansprüche 1 bis 4,
**gekennzeichnet durch** ein in der Schwenkebene des Bremshebels angeordnetes und in eine Ausnehmung des Bremshebels eingetauchtes Stützelement zum Abstützen des Bremshebels in Richtung der Mitnehmerachse.

6. Feststellbremse eines Kraftfahrzeugs mit einer Bremshebelanordnung nach einem der vorhergehenden Ansprüche 1 bis 5.

7. Kraftfahrzeug mit einer Feststellbremse nach Anspruch 6.

## Claims

1. A brake lever assembly for a parking brake of a motor vehicle, comprising a brake lever (1) for manually actuating at least one wheel brake and a rotatably mounted driver axle (2) for a brake cable through which tensile forces can be transmitted to the wheel brake, with the brake lever being coupled in a torque-proof manner with the driver axle in the direction of rotation of the driver axle, **characterized in that** the brake lever (1) is coupled with the driver axle (2) by means of an interlocking connection (8) which is displaceable in the direction of the driver axle.

2. A brake lever assembly according to claim 1, **characterized in that** the interlocking connection between the brake lever and the driver axle is torque-proof in the direction of rotation of the driver axle.

3. A brake lever assembly according to claim 1, **characterized in that** the interlocking connection between the brake lever and the driver axle is rotationally mobile in the direction of rotation of the driver axle, and further a coupling mechanism is formed for coupling the brake lever and the driver axle in a torque-proof manner.

4. A brake lever assembly according to claim 3, **characterized in that** the coupling mechanism enables a rotation of the driver axle relative to the brake lever for coupling the brake lever and driver axle in a torque-proof manner.

5. A brake lever assembly according to one of the claims 1 to 4, **characterized by** a support element for supporting the brake lever in the direction of the driver axle, which support element is arranged in the swiveling plane of the brake lever and plunges into a recess of the brake lever.

6. A parking brake of a motor vehicle with a brake lever assembly according to one of the preceding claims 1 to 5.

7. A motor vehicle with a parking brake according to claim 6.

## Revendications

1. Dispositif de levier de freinage pour un frein d'immobilisation d'un véhicule à moteur, comprenant un levier de freinage (1) pour l'actionnement manuel d'au moins un frein de roue et un axe d'entraîneur (2) supporté avec possibilité de rotation pour un tirant de freinage par lequel des forces de traction peuvent être transmises au frein de roue, dans lequel le levier de freinage est couplé avec l'axe d'entraîneur de façon fixe en rotation dans le sens de rotation de l'axe d'entraîneur, **caractérisé en ce que** le levier de frein (1) est couplé à l'axe d'entraîneur (2) au moyen d'une liaison (8) par engagement positif pouvant se déplacer en direction de l'axe d'entraîneur.

2. Dispositif de levier de freinage selon la revendication 1, **caractérisé en ce que** la liaison par engagement positif est fixe en rotation entre le levier de freinage et l'axe d'entraîneur dans le sens de rotation de l'axe d'entraîneur.

3. Dispositif de levier de freinage selon la revendication 1, **caractérisé en ce que** la liaison par engagement positif entre le levier de freinage et l'axe d'entraîneur est mobile en rotation dans le sens de rotation de l'axe d'entraîneur et un mécanisme de couplage est en outre formé pour le couplage fixe en rotation du levier de freinage et de l'axe d'entraîneur.

4. Dispositif de levier de freinage selon la revendication 3, **caractérisé en ce que** le mécanisme de couplage pour le couplage fixe en rotation du levier de freinage et de l'axe d'entraîneur permet une rotation de l'axe d'entraîneur par rapport au levier de freinage.

5. Dispositif de levier de freinage selon l'une des revendications 1 à 4, **caractérisé en ce qu'**il comporte un élément de soutien disposé dans le plan de basculement du levier de freinage et plongeant dans un évidement du levier de freinage pour soutenir le levier de freinage en direction de l'axe d'entraîneur.

6. Frein d'immobilisation d'un véhicule à moteur avec un dispositif de levier de freinage selon l'une des revendications 1 à 5.

7. Véhicule à moteur avec un frein d'immobilisation selon la revendication 6.
